Europäisches Patentamt

European Patent Office

Office européen des brevets

(19)

(11) Veröffentlichungsnummer : **0 340 397 B1**

(12) # EUROPÄISCHE PATENTSCHRIFT

(45) Veröffentlichungstag der Patentschrift :
25.09.91 Patentblatt 91/39

(51) Int. Cl.$^5$ : **A01F 15/14**

(21) Anmeldenummer : **89103055.3**

(22) Anmeldetag : **22.02.89**

(54) Knotenprüfer einer Strohballenpresse.

(30) Priorität : 23.04.88 DE 3813830

(43) Veröffentlichungstag der Anmeldung :
08.11.89 Patentblatt 89/45

(45) Bekanntmachung des Hinweises auf die
Patenterteilung :
25.09.91 Patentblatt 91/39

(84) Benannte Vertragsstaaten :
BE DE FR NL

(56) Entgegenhaltungen :
EP-A- 0 286 900
EP-A- 0 294 075
EP-A- 0 294 078

(73) Patentinhaber : **CLAAS OHG**
**Münsterstrasse 33**
**W-4834 Harsewinkel 1 (DE)**

(72) Erfinder : **Neukötter, Alois**
**Borgkamp 47**
**W-4413 Beelen (DE)**
Erfinder : **Weddeling, Otger**
**Grüner Grund 12**
**W-4834 Harsewinkel (DE)**
Erfinder : **Homburg, Helmut**
**Breslauer Strasse 35**
**W-4834 Harsewinkel (DE)**

(74) Vertreter : **Hanewinkel, Lorenz, Dipl.-Phys.**
**Patentanwalt Ferrariweg 17a**
**W-4790 Paderborn (DE)**

EP 0 340 397 B1

## Beschreibung

Die Erfindung betrifft eine Vorrichtung zum Knotenprüfen an einer Ballenpresse, bei der die Festigkeit einer von einem Knoter um einen Ballen gebundenen Bindegarnschlinge mittels eines Sensors, der einen Melde bei einem Weitertransport des Ballens nach einer Knotung bei über einer vorgegebenen unteren Festigkeitsgrenze liegender Festigkeit der Schlinge betätigt, wobei, falls eine derartige Betätigung bei dem Weitertransport nicht erfolgt, die Vorrichtung ein Alarmsignal abgibt.

Aus EP-A-0040970 ist eine Knotenprüfvorrichtung an einer Strohballenpresse bekannt, in der die Strohballen in Preßund Transportrichtung von mehreren nebeneinanderliegenden Bindegarnschlingen umgeben werden, die jeweils verknotet werden. Zwecks Prüfung der Festigkeit der verknoteten Schlingen ist je ein Prüffinger neben den Schlingen schwenkbar angeordnet, der gesteuert quer unter die benachbarte Schlinge greift, wenn er mit Beginn des Schnürens gesteuert in diese Stellung eingeschwenkt wird. Der Prüffinger wird mit einer schwachen Haltekraft nach dem Knoten während des Weitertransportes des Ballens gehalten, und über eine vorgegebene Zeit wird jeweils festgestellt, ob der Prüffinger durch eine feste Schnürung aus seiner Querstellung herausgeschwenkt wurde : andernfalls erfolgt eine Fehleranzeige. Diese Vorrichtung hat den Nachteil, daß sie Fehlalarm dann auslöst, wenn der Ballentransport bei geringem Strohaufkommen so langsam ist, daß innerhalb der vorgegebenen Zeit der Prüffinger nicht aus der Verschnürung herausgeschwenkt wird. Weiterhin werden offene Schnürungen nicht sicher erkannt, wenn der Ballen aus festem Stroh besteht, in dem sich der Prüffinger verhaken kann und somit auch ohne Vorhandensein einer Schnürung ausgeschwenkt wird. Weiterhin treten bei festgepreßten Ballen oft so hohe Spannkräfte an den Schnüren auf, daß sie ein Mitnehmen des Prüffingers bewirken, obwohl der Knoten nicht fest ist und die Schnur beim Verlassen der Presse sich löst oder die Schnur hinter dem Knoten gerissen ist. Eine sichere Knotenprüfung ist somit nicht gegeben.

Es ist Aufgabe der Erfindung, einen Knotenprüfer zu offenbaren, der eine sichere Prüfung einer Verschnürung und der Knoten erbringt und somit nur einen Alarm auslöst, wenn eine Fehlschnürung vorliegt, der außerdem einfacher aufgebaut ist und der geringeren Belastungen ausgesetzt ist.

Die Lösung der Aufgabe besteht darin, daß der Sensor im Ablaufweg der Knoten hinter dem Knoter in der Transportrichtung des Ballens außerhalb desselben angeordnet ist, wobei er durch eine Feder auf einen knoterseitigen Anschlag hin gerichtet belastet ist, und der Sensor gabelförmig ausgebildet ist und einen Zwischenraum zwischen den Gabelzinken aufweist, der enger als ein Knoten und weiter als der Bindegarndurchmesser ist, und daß mindestens eine der Gabelzinken in den Zwischenraum gebogen ausgebildet ist und diesem ein Fadenleitblech mit einen Schlitz so zugeordnet ist, daß dieser eine Formschlüssigkeit des Bindegarnes zu den Gabelzinken herstellt, so daß die Gabelzinken jeweils während des Weitertransportes des Ballens über einen vorgegebenen Ballentransportweg mitgenommen werden und demgemäß der Melder betätigt wird.

Es ist besonders vorteilhaft, daß keine elektromagnetischen Stellgliefer im Bereich der Ballenoberfläche angeordnet sind, da dort durch Stroh- und Bindegarnschlaufen sowie durch Staub und Spreu eine große Gefahr der Beschädigung des Prüffingers und des Stellgliedes sowie eine laufende Verschmutzung und damit hoher Wartungsaufwand gegeben wäre.

Weiterhin ist es vorteilhaft, daß das Vorhandensein des Knotens selbst an der Verschnürung geprüft wird und nicht nur eine indirekte Prüfung stattfindet, da es vorkommt, daß ein Knoten zwar gebildet wird, das Bindegarn aber hinter diesem abreißt oder, daß der Knoten auf den Knotenfingern verbleibt und diese für weitere Knotungen blockiert, so daß bei einem folgenden versuchten Knotvorgang die Knotenfinger verbogen werden oder abbrechen.

Besonders vorteilhaft ist es, daß die Überprüfung des Knotenablaufes aus dem Knoter abhängig vom Ballenweg erfolgt, so daß immer gleiche Prüfverhältnisse vorliegen unabhängig davon, wie groß das zeitliche Strohaufkommen ist.

Die Erfindung ist anhand der Fig. 1 bis 6 beispielhaft beschrieben.

Fig. 1    zeigt eine Ballenpresse stark verkleinert in Seitenansicht :
Fig. 2    zeigt den Knoter und den Knotensensor im Detail im größeren Maßstab in Seitenansicht ;
Fig. 3    zeigt die Knotfinger und den Knotensensor in noch größerem Maßstab vor der Knotenablösung;
Fig. 4    entspricht Fig. 3 nach der Knotenablösung :
Fig. 5    zeigt die Ansicht V aus Fig. 3 mit Faden in größerem Maßstab :
Fig. 6    zeigt ein Schaltbild des Knotenprüfers schematisch.

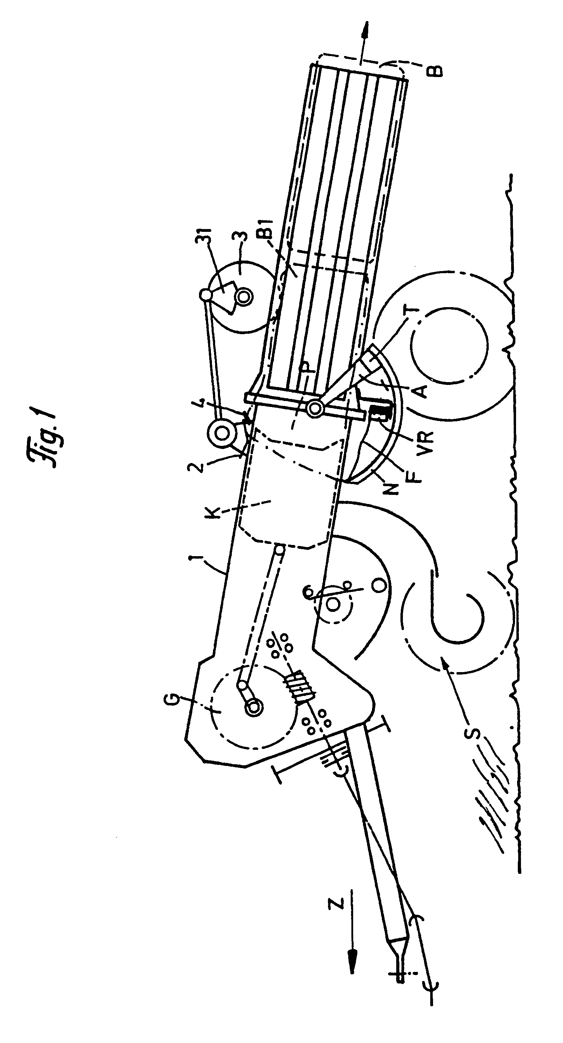

Fig. 1 zeigt eine in Zugrichtung (Z) fahrbare Ballenpresse (1), die an eine nicht dargestellte Zugmaschine anzuhängen ist und von dieser über eine Zapfwelle angetrieben wird. Beim Fahren der Presse in Zugrichtung (Z) wird der Schwaden (S) durch einen Förderer aufgegriffen und in den Pressraum (P) geschoben, wo eine Verdichtung stattfindet. Von dort wird das Stroh nach hinten als Preßballen (B) herausgepreßt. Dazu treibt die

2

Zapfwelle über ein Schnecken- und Exzentergetriebe (G) den Preßkolben (K) periodisch hin- und herlaufend an. Unter der Presse (1) sind Vorratsrollen (VR) mit Bindegarn (F) angeordnet, das jeweils durch Nadeln (N) geführt ist, die an seitlichen Schwenkarmen (A) mittels einer Traverse (T) befestigt sind. Das Bindegarn (F) wird jeweils an seinem Anfang am zugeordneten, oberhalb des Ballens liegenden Knoter (2) gehalten und erstreckt sich — strichpunktiert gezeichnet — frontseitig um den zu erstellenden Ballen (B1). Durch ein Sternrad (3), das von dem Ballenvorschub angetrieben wird, werden, mittels eines Zahnsegmentes (31) gesteuert, bei Erreichen einer vorgegebenen Ballenlänge und bei zurückgezogenem Kolben (K) die Nadeln (N) zu den Knotern (2) hochgeschwenkt, wo das Bindegarn (F) zur Knotenbildung erfaßt wird, worauf die Nadeln zurückgeschwenkt werden und das außer Eingriff gebrachte Zahnsegment (31) in seine Anfangslage zurückkehrt. An dieser vorbekannten Vorrichtung sind jeweils in der Verlaufrichtung des Bindegarnes (F) einer jeden Bindegarnschlinge nahe dem Knoter (2) oberhalb des Ballens (B1) die Knotensensoren (4) angeordnet.

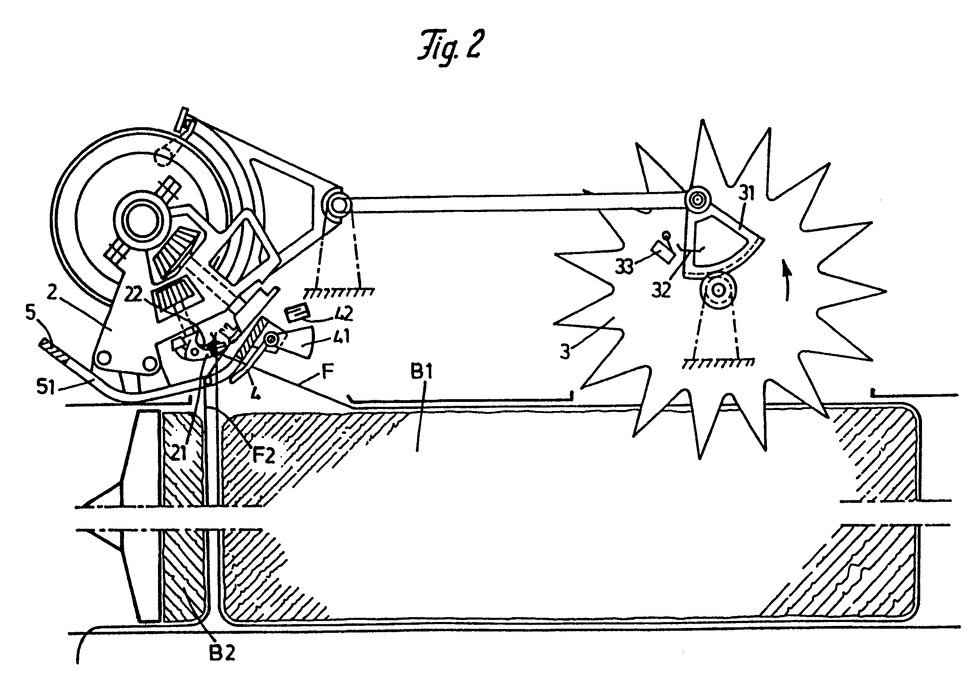

Fig. 2 zeigt die Anordnung eines Knotensensors (4) in seiner Lage zum Knoter (2) und zum Ballen (B1), und zwar in dem Zustand, nachdem jeweils ein Knoten auf dem Knoterschnabel (21, 22) gebildet und abgeschnitten worden ist. Der Fadenanfang (F2) der Umschnürung des nächsten begonnenen Ballens (B2) ist nahe am Knoter (2) festgehalten. Das Bindegarn (F, F2) ist in einem Schlitz (51) eines Fadenleitbleches (5) seitlich geführt. Vor dem Schlitz (51) ist im Fadenanfangsbereich des verknoteten Bindegarnes (F) der gabelförmige Knotensensor (4) dieses kreuzend und in Auslaufrichtung des Knotens schwenkbar angeordnet. An dem Knotensensor (4) befindet sich ein Schwenkpositionsmelder (41, 42) in einer solchen Schwenkposition, die der Knotensensor (4) jeweils bei dem Auslaufen eines Knotens mit Sicherheit erreicht. Weiterhin befindet sich an dem Zahnsegment (31), das der Knotersteuerung dient, ein Nocken (32), der einen Umschalter (33) jeweils abhängig vom Weitertransport eines Ballens (B1) betätigt.

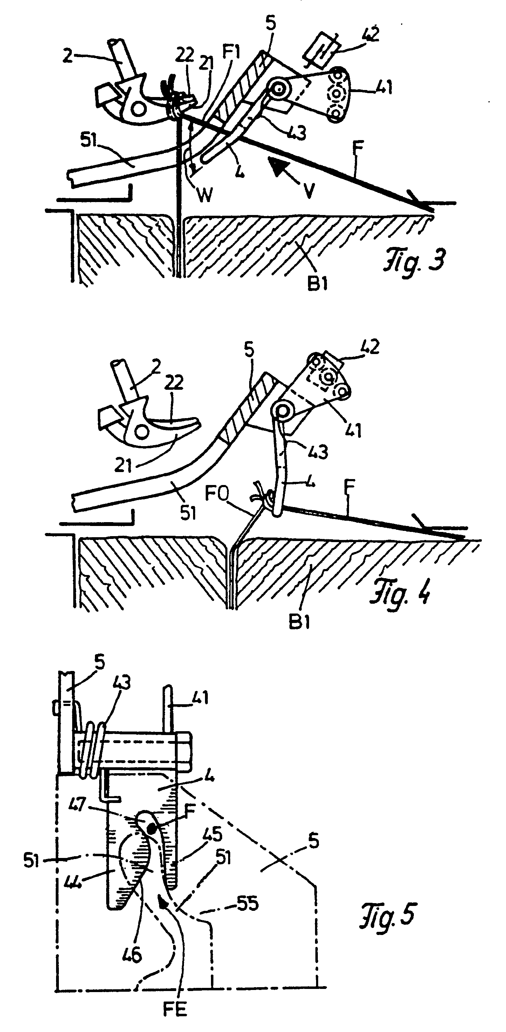

Fig. 3 zeigt nochmals im Detail die Lage des Bindegarnes (F) in dem Schlitz (51) und der Gabel des Knotensensors (4) bevor der Knoten vor dem Knoterschnabel (21, 22) durch den Ballen (B1) abgezogen worden ist. Der Knotensensor (4) ist dabei durch die Rückhaltekraft einer Feder (43) in eine solche Stellung quer zum Bindegarn (F) geschwenkt, daß dessen Gabelzinken mit dem Bindegarnanfang (F1) einen spitzen, etwa 60 Grad großen, Winkel (W) bildet. In dieser Sensorstellung ist der Schwenkpositionsmelder (42) durch die Fahne (41) nicht betätigt.

Fig. 4 zeigt die Vorrichtung von Fig. 3 jeweils in einer Stellung mit weiterbewegtem Ballen (B1), in der der Knoten vom Knoterschnabel (21, 22) abgezogen worden ist und noch in den Gabelzinken des Knotensensors (4) gefangen ist. Dabei werden diese durch den Zug des Bindegarnes (F) verschwenkt, wobei die Fahne (41) den Melder (42) betätigt. Erst beim Weiterbewegen des Ballens (B) zieht das Schlingenende (FO) den Knoten von den Gabelzinken ab.

Fig. 5 zeigt eine Ansicht des Knotensensors (4) in Pfeilrichtung (V) der Fig. 3 mit seinen Gabelzinken (44, 45), deren Zwischenraum (46) entgegen der Fadeneintrittsrichtung (FE) bogenförmig sich erweiternd ausgestaltet ist und der mit dem Schlitz (51) des Fadeinletbleches (5) im oberen Endbereich des Schlitzes (51) einen Fadenfänger (47) für das Bindegarn (F) bildet, der sich jeweils während der Knotenbildung und des anschließenden Verschwenkens des Knotensensors (4) um die Nase (55) herum verlagert, die im Innenbereich des Führungsbleches (5) durch den Schlitz (51) gebildet ist. Erst nach einer ausreichenden Verlagerung der Fadenstränge in Richtung des Fadenfängers (47) des Schlitzes (51) wird der Knoten in die Gabel (44, 45) abgegeben und dort gehaltenen. Falls das Bindegarn (F) dann eine ausreichende Spannung hat, um den Knotensensor (4) gegen die Kraft der Feder (43) zu verschwenken, was nur bei offenem Bindegarn bzw. Knoten nicht der Fall ist, wird kein Alarm gegeben. Dadurch ist sichergestellt, daß nur ein Knoten und jeder Knoten eine Sensorbetätigung bewirkt. Jeweils erst nach einem Weitertransport des Ballens, wodurch der Knotensensor (4) in eine Stellung gebracht ist, in der eine Kontaktbetätigung mit Sicherheit stattgefunden hat, kann das Bidegarnende (FO) den Knoten von der Gabel abziehen. Um dies sicherzustellen, sind die Gabelzinken (44, 45) gegen die Ballentransportrichtung schwach gebogen, so daß sich der Knoten in der Gabel (44, 45) hält. Bei fehlendem oder insbesondere bei gerissenem Bindegarnende (FO) ist diese Haltewirkung jedoch so groß, daß der Ballentransport vergleichsweise noch wesentlich weiter erfolgen muß, bis der Knoten die Gabel (44, 45) verläßt. Dadurch wird der Sensorkontakt entsprechend lange bzw. über den entprechend langen Ballentransportweg betätigt. Diesen Fehlerzustand der Knotenbildung stellt die Auswerteschaltung jeweils durch eine Prüfung der Kontaktmeldung bei einem vorgegebenen Ballenweg fest.

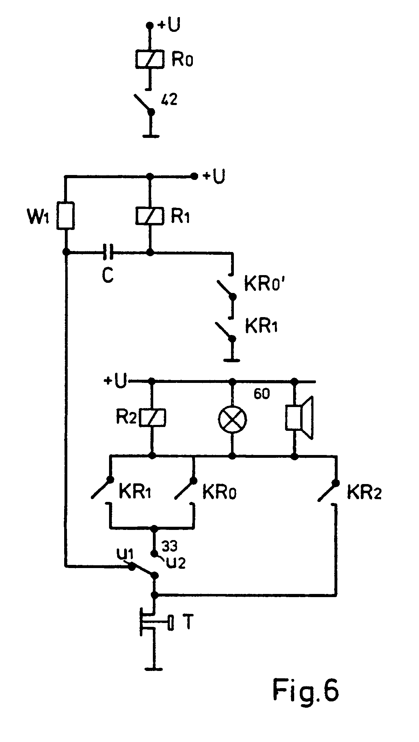

Fig. 6 zeigt ein Schaltschema einer bevorzugten Knotenprüfvorrichtung. In einer einfachen Knotenprüfvorrichtung wird jeweils mit einer Betätigung des Knoters ein Zeitglied gestartet, während dessen Zeitablauf der Knotensensor eine Betätigung gemeldet haben muß, und falls dies nicht der Fall war, wird ein Alarm ausgelöst. Bei der dargestellten Schaltung wird jedoch statt einer Prüfzeit der Ballenweg ausgewertet, wozu der Mitnehmer (32), der an dem Segment (31) angeordnet ist, das von dem Sternrad (3) angetrieben wird, jeweils in einer Ballenstellung, in der der Knoten mit Sicherheit vom Knoten abgezogen sein muß, und bevor ein nächster Knoten gebildet wird, den Umschalter (33) betätigt, durch den im Fehlerfall die Alarmmelder (60), die aus einer

3

Signallampe und einem Summer bestehen können, bestromt werden.

Dem Sensorkontakt (42) ist ein Hilfsrelais (Ro) nachgeschaltet, so daß dessen Ein- und Ausschaltzustände an den Hilfsrelaiskontakten (KRo, KRo') verfügbar sind.

Durch einen ersten Umschaltkontakt (U1) des Umschalters (42) wird über einen Kondensator (C), der dann jeweils über einen Widerstand (W1) entladen ist, ein erstes Relais (R1) eingeschaltet, das sich über einen Haltekontakt (KR1) in Verbindung mit einem der Hilfsrelaiskontakte (KRo') selbst hält bis ein Knoten den Sensorkontakt (42) und dadurch den Hilfsrelaiskontakt (KRo') öffnet. Ist dies jedoch nicht der Fall, wenn der zweite Umschaltkontakt (U2) betätigt wird, so werden über den Arbeitskontakt (KR1) des ersten Relais (R1) ein zweites Relais (R2) und die Alarmmelder (60) betätigt und weiterhin über einen Selbsthaltekontakt (KR2) und einen Löschtastenruhekontakt (T) bis zu dessen Betätigung gehalten.

Ist jedoch der Sensorkontakt (42) dann noch durch einen hängengebliebenen Knoten betätigt, wenn der zweite Umschaltkontakt (U2) betätigt wird, dann werden über einen Hilfsrelaiskontakt (KRo) der Alarm und das zweite Relais (R2) entsprechend ausgelöst bzw. in Selbsthaltung verbracht.

Diese logische Schaltung läßt sich mit äquivalenten Mitteln vom Fachmann im Rahmen der Erfindung variieren. Sind mehrere Knoter vorhanden, so ist diesen jeweils ein Hilfsrelais nachgeschaltet. Deren entsprechende Kontakte (KRo', KRo) werden einander parallel geschaltet.

## Patentansprüche

1. Vorrichtung zum Knotenprüfen an einer Ballenpresse, bei der die Festigkeit einer von einem Knoter (2) um einen Ballen (B1) gebundenen Bindegarnschlinge (F) mittels eines Sensors (4), der einen Melder (42) bei einem Weitertransport des Ballens (B1) nach einer Knotung bei über einer vorgegebenen unteren Festigkeitsgrenze liegender Festigkeit der Schlinge (F) betätigt, wobei, falls eine derartige Betätigung bei dem Weitertransport nicht erfolgt, die Vorrichtung ein Alarmsignal abgibt, dadurch gekennzeichnet, daß der Sensor (4) im Ablaufweg der Knoten hinter dem Knoter (2) in der Transportrichtung des Ballens (B1) außerhalb desselben angeordnet ist, wobei er durch eine Feder (43) auf einen knoterseitigen Anschlag hin gerichtet belastet ist, und der Sensor (4) gabelförmig ausgebildet ist und einen Zwischenraum (46) zwischen den Gabelzinken (44, 45) aufweist, der enger als ein Knoten und weiter als der Bindegarndurchmesser ist, und daß mindestens eine der Gabelzinken (44) in den Zwischenraum (46) gebogen ausgebildet ist und diesem ein Fadenleitblech (5) mit einen Schlitz (51) so zugeordnet ist, daß dieser eine Formschlüssigkeit des Bindegarnes (F) zu den Gabelzinken (44, 45) herstellt, so daß die Gabelzinken (44, 45) jeweils während des Weitertransportes des Ballens (B1) über einen vorgegebenen Ballentransportweg mitgenommen werden und demgemäß der Melder (42) betätigt wird.

2. Vorrichtung nach Anspruch 1, dadurch gekennzeichnet, daß der Knotensensor (4) um eine Achse außerhalb des Bindegarnes (F) schwenkbar angeordnet ist und mittels der Feder (43) gegen den knoterseitigen Anschlag in einer solchen Anfangsstellung gehalten wird, daß er einen Winkel (W) von etwa 60° mit dem Bindegarnanfang (F) bildet.

3. Vorrichtung nach einem der Ansprüche 1 oder 2, dadurch gekennzeichnet, daß die Gabelzinken (44, 45) sich endseitig öffnen.

4. Vorrichtung nach einem der Ansprüche 1 bis 3, dadurch gekennzeichnet, daß die Gabelzinken (44, 45) in Knotenrichtung leicht gebogen sind, so daß ein Knoten durch ein festes Fadenende (F0) beim Weitertransport jeweils entsprechend dem vorgegebenen Ballentransportweg von den Gabelzinken (44, 45) abgezogen wird, bei losem Fadenende (F0) jedoch erst nach einem längeren als dem vorgegebenen Ballentransportweg abgezogen wird oder bei völligem Fadenriß gar nicht abgezogen wird.

5. Vorrichtung nach einem der vorstehenden Ansprüche, dadurch gekennzeichnet, daß ein mit dem Ballen (B1) formschlüssiger Sternradmitnehmer (3) den Knoter (2) abhängig von dem jeweils zurückgelegten Ballentransportweg steuert und über den Sternradmitnehmer (3) einen Umschaltkontakt (33) jeweils innerhalb des vorgegebenen Ballentransportweges, nach welchem der Knoten über den Knotensensor (4) durchgelaufen sein muß und vor dem ein Knoten bei losem Knotenende (F0) ausläuft, betätigt wird und der Umschaltkontakt (33) zu einer Abfrage des Meldekontaktes (42) dient.

6. Vorrichtung nach Anspruch 5, dadurch gekennzeichnet, daß der Meldekontakt (42) in Verbindung mit dem Umschaltkontakt (33) jeweils derart abgefragt ist, daß eine Alarmvorrichtung (60) dann betätigt wird, wenn jeweils zwischen zwei Umschaltkontaktbetätigungen der Meldekontakt (42) nicht betätigt wurde oder wenn der Umschaltkontakt (33) während einer Betätigung des Meldekontaktes (42) betätigt ist.

7. Vorrichtung nach Anspruch 6, dadurch gekennzeichnet, daß die Alarmschaltung (60, R2, T) in Selbsthaltung abhängig von einem Tastenkontakt (T) geschaltet ist.

8. Vorrichtung nach einem der vorstehenden Ansprüche, dadurch gekennzeichnet, daß mehrere Knoten-

EP 0 340 397 B1

sensor-Vorrichtungen (4) bezüglich der Überwachung und Alarmgebung parallel geschaltet sind.

## Claims

1. Device for checking the knots on a baling press, where the firmness of a binding twine loop (F) tied around a bale (B1) by a knotter (2) (is measured) via a sensor (4), which activates an indicator (42) when the bale (B1) is conveyed onward after knotting of the loop (F) at a strength above a preset minimum strength limit, whereby, if such an activation did not take place when the bale was conveyed onward, the device gives an alarm signal, characterised by the fact that the sensor (4) is arranged on the run-out path of the knot downstream of the knotter (2) in the direction of travel of the bale (B1) but outside it, whereby it is loaded by means of a spring towards a limit-stop on the knotter side, and the sensor (4) is designed in a fork-shape and has a space (46) between the fork prongs (44, 45) which is narrower than a knot and wider than the diameter of the twine, and that at least one of the fork prongs (44) curves into the space (46) and a thread-guide plate (5) with a slot (51) is allocated to this such that the latter aligns the twine (F) with the fork prongs (44, 45) so that the fork prongs (44, 45) are always taken up when the bale (B1) is conveyed along a preset bale conveyor path and the indicator (42) is activated correspondingly.

2. Device as per claim 1, characterised by the fact that the knot sensor (4) is arranged to pivot around an axis outside the binder twine (F) and it is held by the spring (43) against the limit-stop on the knotter side in an initial position such that it forms an angle (W) of about 60° with the start of the binder twine (F).

3. Device as per one of claims 1 or 2, characterised by the fact that the fork prongs (44, 45) open up at the ends.

4. Device as per one of claims 1 to 3, characterised by the fact that the fork prongs (44, 45) are slightly curved in the direction of the knot, so that where there is a firm end to the twine (F0) in the onward conveying a knot is drawn off by the fork prongs (44, 45) in accordance with the preset bale conveyor path, but where the end of the twine (F0) is loose it is only drawn off after a longer distance than the preset bale conveyor path or, if the twine tears completely, it is not drawn off at all.

5. Device as per one of the above claims, characterised by the fact that a star-wheel carrier (3) which follows the shape of the bale (B1) controls the knotter (2), in accordance with the respective path covered and a switch contact (33) is activated via the star-wheel carrier (3), always within the preset path, by which the knot must run over the knot sensor and before which a knot with a loose end (F0) runs out, and the switch contact (33) serves to interrogate the indicator contact (42).

6. Device as per claim 5, characterised by the fact that the indicator contact (42) is always interrogated in conjunction with the switch contact (33) in such a way that an alarm device (60) is activated when the indicator contact (42) has not been activated between two switch contact activations or when the switch contact (33) is activated during the activation of the indicator contact (42).

7. Device as per claim 6, characterised by the fact that the alarm circuit (60, R2, T) is locked on to a key contact (T).

8. Device as per one of the above claims, characterised by the fact that several knot sensor devices (4) are connected in parallel in relation to monitoring and setting off the alarm.

## Revendications

1. Détecteur de fonctionnement du noueur d'une presse à balles, à l'aide duquel la résistance d'une boucle de corde, nouée autour d'une balle est contrôlée par un palpeur, qui actionne un avertisseur pour le transport de la balle après nouage, lorsque la résistance du noeud dépasse une valeur-limite de résistance prédéfinie, le dispositif lançant un signal d'alarme en l'absence d'un tel actionnement de la poursuite du transport, caractérisé par le fait que le palpeur de noeud (4), par rapport au sens de déroulement de la boucle du noeud, est disposé derrière le noueur (2), dans le sens de transport de la balle à ficeler (B1), à l'extérieur de celle-ci, et est chargé par ressort (43), étant dirigé, côté noeud, sur une butée, ce palpeur (4) étant conçu en forme de fourche, dont les dents (44, 45) présentent un intervalle (46) qui est plus étroit qu'un noeud et plus large que le diamètre de la corde, et qu'au moins une des dents de fourche (44) est coudée dans l'intervalle (46), lequel est équipé d'une tôle de guidage de corde (5), pourvue d'une fente (51), que celle-ci forme un clabotage pour la corde (F) par rapport aux dents de la fourche (44, 45), de sorte que ces dernières sont entraînées lors de la poursuite du transport de chaque balle (B1) sur un parcours prédéterminé et que l'avertisseur (42) est actionné adéquatement.

2. Détecteur selon revendication 1, caractérisé par le fait que le palpeur de noeud (4) est pivotable, sur un

5

axe, en dehors de la corde (F) et est maintenu, à l'aide d'un ressort (43), contre une butée, côté noeud, dans une position initiale, dans laquelle il forme un angle (W) d'environ 60 degrés par rapport au bout antérieur de la corde (F).

3. Détecteur selon une des revendications 1 et 2, caractérisé par le fait que les dents de la fourche (44, 45) s'ouvrent à leur extrémité.

4. Détecteur selon revendications 1 à 3, caractérisé par le fait que sont légèrement coudées en direction du noeud, de sorte que chaque noeud est tiré hors des dents de la fourche (44, 45), lors de la poursuite du transport de la balle sur un parcours prédéterminé, par une extrémité de corde (F0) à l'état voulu, mais ne l'est qu'après une section plus longue du transport de la balle lorsque le bout de la corde (F0) est détaché, et ne l'est pas du tout quand la corde est complètement rompue.

5. Détecteur selon l'une des revendications précédentes, caractérisé par le fait qu'un entraîneur à roue-étoile (3), formant un clabotage avec la balle (B1) commande le noueur (2) en fonction de la section de transport parcourue par la balle en question et qu'un contact à permutation (33) est actionné par l'entraîneur à roue-étoile (3), au cours de la section de transport, après laquelle le noeud doit avoir traversé le palpeur (4) et avant laquelle un noeud se défait en cas d'extrémité de corde (F0) détachée, le contact à permutation (33) servant à l'interrogation du contact d'avertissement (42).

6. Détecteur selon revendication 5, caractérisé par le fait que le contact d'avertissement (42), en connexion avec le contact à permutation (33) est interrogé de sorte qu'une alarme (60) se trouve déclenchée chaque fois que le contact d'avertissement (42) n'a pas été actionné entre deux actionnements du contact à permutation (33) ou quand le contact à permutation (33) est actionné pendant un actionnement du contact d'avertissement (42).

7. Détecteur selon revendication 6, caractérisé par le fait que le circuit d'alarme (60, R2, T) est connecté en autoentretien en fonction d'un contact à touche (T).

8. Détecteur selon l'une des revendications précédentes, caractérisé par le fait que plusieurs palpeurs de noeuds (4) sont connectés parallèlement en ce qui concerne le contrôle et la signalisation d'alarme.

Fig.1

Fig. 2

EP 0 340 397 B1

*Fig. 3*

*Fig. 4*

*Fig. 5*

Fig.6